# EUROPÄISCHE PATENTANMELDUNG

(11) **EP 0 701 124 A1**
(43) Veröffentlichungstag der Anmeldung: **13.03.1996**
(21) Anmeldenummer: 94113927.1
(22) Anmeldetag: 06.09.1994
(51) Int. Cl.: G01N 27/407

(54) **Sauerstoffsensor**

(71) Anmelder: CONEL AG, CH-8050 Zürich (CH)
(72) Erfinder: Dietrich, Rainer, Dipl.-Masch.Ing., CH-6289 Müswangen (CH)
(74) Vertreter: Troesch Scheidegger Werner AG

(57) **Zusammenfassung**

Ein Sauerstoffsensor für die Messung von Sauerstoffanteil in Gasen weist eine als dünne Membran (6) ausgebildete Keramikschicht, vorzugsweise aus Zirkoniumdioxyd, auf. Jeweils paarweise auf beiden Seiten der Membran (6) gegenüberliegend sind eine Vielzahl voneinander beabstandete Elektrodenleitungen (4,5) vorgesehen. Vorzugsweise sind direkt auf dem Sauerstoffsensor Heizleitungen (7) vorgesehen. Erfindungsgemäss wird ein solcher Sauerstoffsensor in sog. Dünnfilmtechnik hergestellt. Derartige erfindungsgemässe Sauerstoffsensoren sind einfach und preisgünstig in grossen Stückzahlen herstellbar und weisen sehr gute mechanische Eigenschaften (Festigkeit) auf. Solche Sauerstoffsensoren können überdies besonders vorteilhaft als Brennstoffzellen oder Sauerstoffpumpen verwendet werden.

## Beschreibung

Die vorliegende Erfindung betrifft einen Sauerstoffsensor für die Messung des Sauerstoffanteils in Gasen, welcher zwei durch eine Keramikschicht getrennte Elektroden aufweist, ein Verfahren zu dessen Herstellung sowie die Verwendung solcher Sensoren.

Herkömmlicherweise erfolgt die Sauerstoffmessung von Gasen, insbesondere bei Verbrennungsanlagen, mit Sauerstoffsensoren aus mit durchlässigen Elektroden versehenen scheibenförmigen, rohrförmigen oder kugelförmigen Keramikkörpern aus Zirkoniumdioxyd. Üblicherweise bestehen die Elektroden aus einer porösen, d.h. sauerstoffdurchlässigen, Platinschicht. Die Herstellung solcher Sensoren erfolgt mit herkömmlichen Verfahren, wobei ein grosser Teil manuelle Arbeit ist. Dadurch werden u.a. die Herstellungskosten sehr gross. Um die für die Messung benötigte Temperatur des Keramikkörpers von ca. 500 C - 700 C zu erreichen, werden beispielsweise Widerstandsdrahtheizungen eingesetzt. Mittels Temperaturfühler wird die Temperatur des Kermikkörpers festgestellt und durch eine Regelungseinrichtung konstant gehalten. Für genaue Messungen ist das Einhalten einer definierten Temperatur sehr wichtig. In anderen Fallen wird die Temperatur nur gemessen und die Sauerstoffmessung mittels eines Rechners korrigiert.

Solche herkömmlichen Sensoren sind einerseits in der Abmessung verhältnissmässig gross und insbesondere auch teuer in der Herstellung. Sie eignen sich damit eigentlich nur für industrielle Anwendungen, bei denen die Kosten für die damit durchzufuhrende Sauerstoffmessung im Verhältnis zu den gesamten Anlagekosten klein sind, wie beispielsweise bei Kehrichtverbrennungsanlagen, Zementwerken, Grossfeuerungen etc.

Eingesetzt werden auch billigere Sensoren beispielsweise für die Messung des Abgases von katalytisch gereinigten Verbrennungsmotoren, beispielseise für Personenwagen. Derartige Sensoren können lediglich detektieren, ob der Verbrennungsprozess oxidierend oder reduzierend ist, aber keine quantitativen Angaben über den Sauerstoffanteil im Verbrennungas machen.

Insbesondere können nun aber bekannte Sensoren in kleinen, preisgünstigen Anlagen, beispielsweise bei Kleinbrenneranlagen für Heizungen oder Mager-Verbrennungsmotoren, aus technischen Gründen und/oder Kostengründen nicht eingesetzt werden. Einerseits deshalb, weil die bekannten Billigsensoren keine ausreichend genauen Messresultate erbringen und andererseits die bekannten, genauen Sensoren zu teuer und in der Anwendung zu aufwendig sind. Deshalb wird bei solchen Anlagen häufig auf eine Sauerstoffmessung verzichtet, obschon eine solche Messung gerade für die Regelung und Optimierung von Verbrennungsprozessen geeignet wäre.

Die Aufgabe der vorliegenden Erfindung bestand nun darin, einen Sauerstoffsensor zu finden, welcher zuverlässig den Sauerstoffgehalt eines Gases bestimmen kann, aber einfach und in grossen Stückzahlen preisgünstig herzustellen ist.

Diese Aufgabe wird erfindungsgemäss durch das Kennzeichen des Anspruchs 1 gelöst.

Der erfindungsgemässe Sauerstoffsensor weist einen einfachen, vorzugsweise durch die bekannte Dünnfilm- und Mikrotechnik preisgünstig herzustellenden Aufbau auf. Durch die erfindungsgemässe Gestaltung des Sensorenaufbaus, insbesondere des Keramikkörpers als Membran, kann ein sehr kleiner aber mechanisch stark belastbarer Sensor geschaffen werden. Ein weiterer Vorteil der sehr dünnen Membran liegt darin, dass die Betriebstemperatur der Membran gegenüber herkömmlichen, dicken Keramikschichten gesenkt werden kann. Dies führt zu einem reduzierten Energiebedarf für die Messung, resp. zu einem reduzierten Energiebedarf für einen O₂-Pumpenbetrieb.

Bevorzugte Ausführungsformen der Erfindung sind in den Ansprüchen 2 bis 12 dargelegt.

Ein grosser Vorteil ergibt sich durch die erfindungsgemässe Anordnung der Heizung direkt auf dem Sensorkörper. Damit kann eine genau definierte Temperatur des Keramikkörpers realisiert werden, was u.a. zu sehr genauen Messresultaten führt. Die erfindungsgemässe Ausgestaltung der Heizung führt zu einer besonders einfachen Beibehaltung dieser Temperatur.

Erfindungsgemäss wird ein solcher Sensor gemäss Anspruch 13 hergestellt.

Weiter ist erfindungsgemäss vorgesehen, solche Sensoren als Brennstoffzellen nach Anspruch 14 zu verwenden. Durch die sehr kompakten Abmessungen, der kostengünstigen Herstellung und den guten mechanischen Eigenschaften der dünnen Membran eignen sich solche Sensoren auch besonders gut als Brennstoffzellen. Bei Solchen wird die Energie des Brennstoffs in elektrische Energie umgewandelt, welche über die Leiterbahnen bezogen werden kann. Hierfür werden eine Vielzahl solcher Zellen in einem geeigneten Gehäuse hinter- und/oder nebeneinander angeordnet und die Leiterbahnen parallel oder seriell miteinander verbunden.

Ebenfalls eignet sich ein solcher erfindungsgemässe Sensor auch als Sauerstoffpumpe nach Anspruch 15.

Ein Ausführungsbeispiel der Erfindung wird nachstehend anhand von Zeichnungen noch näher erläutert. Es zeigen
Fig. 1 den prinzipiellen Aufbau eines Sauerstoffsensors;
Fig. 2 den Querschnitt durch einen erfindungsgemässen Sauerstoffsensor;
Fig. 3 einen weiteren Querschnitt durch den erfindungsgemässen Sauerstoffsensor;
Fig. 4 die Aufsicht auf den Sauerstoffsensor nach den Figuren 2 und 3.

Die Messung der Sauerstoffkonzentration in Gasen erfolgt mittels einer Eigenschaft des Zirkoniumdioxyds, welches durch gezielte Fehlstellen im Gitter bei erhöhten Temperaturen als Festkörperelektrolyt für Sauerstoffionen leitfähig wird. Wenn nun auf beiden Seiten des Zirkoniumdioxyds der Sauerstoffpartialdruck unterschiedlich ist, so erfolgt eine Sauerstoffionenwanderung, welche eine elektromotorische Kraft (EMK) erzeugt, welche direkt proportional zur absoluten Temperatur ist und sich nach der Gleichung von Nernst berechnen lässt.

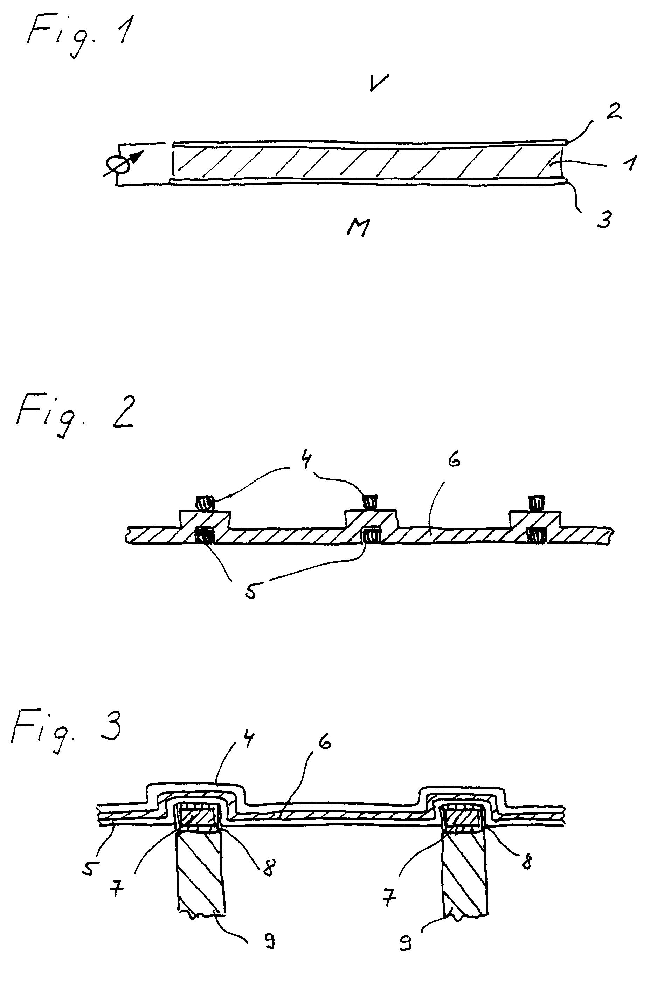

Der grundsätzliche Aufbau eines Sauerstoffsensors, welcher diese Eigenschaft ausnutzt, ist schematisch in Figur 1 dargestellt. Der Sensor weist einen Körper 1 aus Zirkoniumdioxyd auf, welcher beidseitig mit je einem elektrischen Leiter 2, 3 versehen ist, bekannterweise bestehen diese Leiter 2,3 aus porösem Platin. Auf der einen Seite des Sensors ist das zu messende Gas M, auf der anderen Seite befindet sich ein Referenzgas V, beispielsweise Luft. Die Platinbeschichtung 2, 3 ist derart ausgeführt, dass sie sauerstoffionendurchlässig ist. Wenn nun das Zirkoniumdioxyd aufgeheizt wird, vorzugsweise auf ca. 600 C - 700 C, so findet eine Wanderung von Sauerstoffionen von M nach V, resp. umgekehrt, statt, sofern die beiden Gase unterschiedliche Sauerstoffkonzentrationen aufweisen. Diese Sauerstoffionenwanderung induziert in den beiden Leitern 2 und 3 eine messbare Spannung, welche direkt einen Wert für die Sauerstoffkonzentration im Gas M im Verhältnis zur bekannten Sauerstoffkonzentration im Gas V darstellt. In der Regel wird der Sauerstoffsensor in Form eines einseitig geschlossenen Rohres gebaut, bei welchem sich das Referenzgas V z.B. auf der Innenseite befindet. Beispielsweise sind die sogenannten Lambdasonden der katalytisch gereinigten Verbrennungsmotoren von Fahrzeugen derart aufgebaut.

Durch eine spezielle Anordnung kann ein Sauerstoffsensor aus Zirkoniumdioxyd auch ohne Referenzgas betrieben werden.

In Figur 2 ist schematisch ein Querschnitt durch einen erfindungsgemässen Sauerstoffsensor dargestellt. Die elektrischen Leiter sind dabei in Form von parallel zueinander angeordneten einzelnen Leiterbahnen 4, 5 ausgeführt. Dazwischen ist eine dünne Schicht aus Zirkoniumdioxyd in Form einer Membrane 6 vorgesehen. Dabei sind die Schichtdicken sowohl der Leiterbahnen 4,5, wie auch der Membrane 6 beispielsweise für den Einsatz als Messsensor beispielsweise annähernd gleich gross, vorzugsweise im Bereich von 1µm. Bei einer Verwendung des Sensors als Brennstoffzelle können aber die Querschnitte der Leiterbahnen erheblich grösser dimensioniert sein, um den Strom abzuführen. Die Leiterbahnpaare 4,5 sind parallel in einem Abstand von beispielsweise 10µm angeordnet. Durch die Aufteilung der Leiter in voneinander beabstandete Leiterbahnen 4,5 entfällt die Notwendigkeit einer speziellen sauerstoffdurchlässigen Leiterschicht, der Sauerstoff kann problemlos zwischen den Leiterbahnen 4,5 hindurch wandern. Durch die mäanderförmige Ausbildung des Membranquerschnitts 6 wird eine hohe Eigensteifigkeit der Membrane 6 erreicht, was zu besonders guten mechanischen Eigenschaften des Sensors führt.

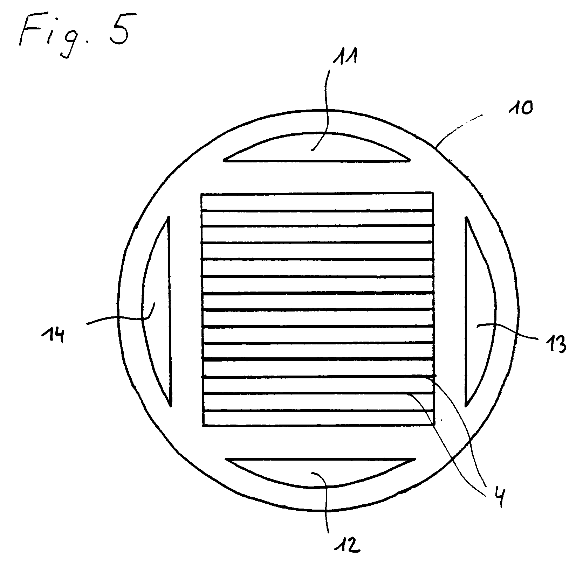

Für die Beheizung der Membrane 6 sind weiter Heizbahnen 7 vorgesehen, wie im Längsschnitt durch den Sauerstoffsensor in Fig. 3 dargestellt. Diese Heizbahnen 7 verlaufen vorzugsweise quer zur Richtung der Leiterbahnen 4,5. Auch hier wird durch Herumführen der Membrane 6 und der Leiterbahnen 4,5 um die Heizbahnen 7 eine Versteifung des Sensors erreicht. Um die Heizbahnen 7 von den unteren Leiterbahnen 5 elektrisch zu isolieren, ist um die Heizbahnen 7 herum, wenigstens im Kontaktbereich zwischen Leiterbahnen 5 und Heizungsbahnen 7, eine Isolationsbeschichtung 8 vorgesehen, beispielsweise ein Siliziumdioxid. Der Sauerstoffsensor wird schliesslich durch Träger 9 aus beispielsweise Silizium abgestützt und umrandet. Die Träger 9 sind beispielsweise in einem Abstand von ca. 100µm angeordnet. Dieser Abstand richtet sich nach dem zu erreichenden maximalen Betriebsdruck des Sensors.

In Fig. 5 ist die Aufsicht auf den in den beiden vorangegangenen Figuren dargestellten, erfindungsgemässen Sauerstoffsensor dargestellt. Der Sensor ist hier beispielsweise als runde Scheibe 10 ausgeführt. Das Grundmaterial der Scheibe 10 besteht hier beispielsweise aus Silizium. Darauf werden die verschiedenen Schichten in Dünnfilmtechnik aufgebracht. D.h. zuerst werden die Heizbahnen 7 aufgebracht und anschliessend mit einer Isolationsschicht 8 versehen. Die Heizbahnen 7 sind mit den beiden Kontaktierstellen 11 und 12 verbunden und können damit an eine Heizeinrichtung, beispielsweise eine Spannungsquelle, angeschlossen werden. Anschliessend werden ebenfalls in Dünnfilmtechnik die Leiterbahnen 5, die Membran 6 und anschliessend die Leiterbahnen 4 erstellt. Die Leiterbahnen 4 sind beispielsweise mit der Kontaktierstelle 13 verbunden und die Leiterbahnen 5 mit der Kontaktierstelle 14. Anschliessend werden auf der Unterseite der Scheibe 10 in einem vorbestimmten Muster, beispielsweise kreisoder rechteckförmige Bereiche des Grundmaterials abgetragen, um die erforderliche Gasdurchlässigkeit des Sensors zu erhalten. Das verbleibende Grundmaterial bildet dann die in Figur 3 ersichtlichen Stege 9, sowie die Randabstützung der gesamten Scheibe 10. Eine derartige Scheibe 10 weist beispielsweise einen Durchmesser von ca. 8mm auf, wobei die Schichtdicke der Membran 6 ca 1 - 3µm beträgt. Ein derartiger Sensor lässt sich durch die Dünnschichttechnik verhältnismässig einfach und vor allem in grossen Stückzahlen preisgünstig herstellen. Damit können nun auch in bislang nicht mit derartigen Sensoren ausgestatteten Anlagen, insbesondere Verbrennungsanlagen, konkurrenzfähig Sauerstoffmessungen durchgeführt werden. Aufgrund der geringen Leistungsaufnahme kann auch eine preisgünstige Elektronik zum Einsatz kommen, wie auch Niederspannung an Stelle von Hochspannung, worauf eine elektrotechnische Prüfung entfällt.

Wenn der Sensor für die Messung der Sauerstoffkonzentration ohne Referenzgas verwendet werden soll, kann vorzugsweise eine Diffusionsöffnungen in der Membrane 6 oder der Scheibe 10 vorgesehen sein. Über dieser Diffusionsöffnung wird ein gasdichter Hohlraum, beispielsweise in Form einer Glocke, angeordnet. Dieser Hohlraum kann beispielsweise durch die Scheibe 10 und die Membrane 6 gebildete sein.

Zur Verbesserung des Signals des Sensors kann beidseitig der Scheibe 10 zwischen den Elektrodenleitungen 4,5 und der Membran 6 vorzugsweise eine zusätzliche Schicht aus einem elektrisch leitenden, sauerstoffionendurchlässigen Material aufgebracht werden.

Wenn die Heizbahnen 7 wie vorzugsweise vorgeschlagen aus einem PTC-Widerstandsmaterial bestehen, können diese sowohl als Heizung wie auch als Temperaturfühler betrieben werden. Dieser Widerstand ist vorzugsweise trimmbar, damit der Sauerstoffsensor ohne Nachkalibrierung ausgetauscht werden kann. Durch den in seinen Abmessungen sehr kleinen Sensor wird eine ausgezeichnete Temperaturkonstanz erreicht, durch welche eine gute Reproduzierbarkeit des Sauerstoffsignals des Sensors erreicht wird. Damit kann auf einen separaten Temperaturfühler verzichtet werden. Dies reduziert wiederum den baulichen Aufwand des Sauerstoffsensors. Vorzugsweise wird die Betriebsspannung der Heizbahnen 7 aktiv geregelt. Dies kann beispielsweise mittels einer geeigneten elektronischen integrierten Schaltung erfolgen. Diese kann beispielsweise für die Heiz- und Messzyklen die Betriebsspannung ein- und ausschalten oder auch eine Strom- und Spannungsmessung während der Heizphase vornehmen. Insbesondere kann in einer weiteren Variante auch eine Konstantspannungsquelle derart stromkorrigiert werden, dass der Widerstand konstant bleibt.

Die kleinen Abmessungen des Sensors erlauben auch auf einfache Weise einen gasdichten und wärmeisolierten Einbau. Ebenso wird der Einsatz von Flammsperren am oder im Gehäuse des Sensors aufgrund der kleinen Abmessungen sehr erleichtert. Weiter wird, vorzugsweise, durch die auf dem Sensor direkt integrierte Heizung 7, auch die für die Erwärmung der Zirkoniumdioxydschicht 6 benötigte Leistungsaufnahme reduziert. Durch den erfindungsgemässen Aufbau ist der Sensor mechanisch genügend stabil, um auch erhöhten Druckbeanspruchungen oder anderen mechanischen Beanspruchungen gewachsen zu sein.

Erfindungsgemäss wird ein solcher Sauerstoffsensor in Dünnfilmtechnik beispielsweise auf einem Siliziumgrundkörper hergestellt. Nach dem Auftragen der verschiedenen Schichten (Heizungsbahnen 7 mit Isolationsbeschichtung 8, Leiterbahnen 4,5, Membran 6) werden bestimmte Bereiche des Siliziumgrundkörpers abgetragen, um eine Sauerstoffdurchlässigkeit zu erreichen. Diese wird an denjenigen Stellen erreicht, an welchen beidseitig des Sensors nur die Membran 6 vorhanden ist. Diese Bereiche werden vorzugsweise derart ausgestaltet, dass das verbleibende Grundmaterial Abstützungen 9 für den Sensor bilden, was zu einer zusätzlichen Versteifung des Sensors führt. Durch die Bemessung dieser Bereiche kann die Membrane 6, d.h. der Sauerstoffsensor, auf einen bestimmten Betriebsdruck festgelegt werden.

Der erfindungsgemässe, flache Sauerstoffsensor kann auf einfache Weise in ein Gehäuse gasdicht und wärmeisoliert eingebaut werden, insbesondere mit den bereits erwähnten Flammsperren.

Erfindungsgemäss wird als weiteres Anwendungsgebiet eines solchen Sauerstoffsensors vorgeschlagen, diesen als Brennstoffzelle zu verwenden. Damit kann Sauerstoff auf einfache Weise in elektrische Energie umgewandelt werden. Der sehr kleine Aufbau des Sensors ermöglicht den Aufbau von sehr kleinen, leistungsfähigen Brennstoffzellen. Solche Zellen können gerade bei mobilen Einrichtungen, wie beispielsweise Elektromobilen, sehr vorteilhaft eingesetzt werden. Die Brennstoffzellen können natürlich auch grösser aufgebaut werden, beispielsweise mit einem Durchmesser von ca. 100mm, was eine Zelle pro Wafer ergibt.

Ebenfalls kann der Sauerstoffsensor als Sauerstoffpumpe verwendet werden, indem an den sich gegenüberliegenden Leiterbahnen (4,5) eine Spannung angelegt wird. Dabei kann Sauerstoff von einer Seite des Sauerstoffsensors auf die andere transportiert werden, ohne dass unterschiedliche Sauerstoffanteile der Gase in den beiden durch den Sauerstoffsensor getrennten Räume vorhanden sein müssen. D.h. es wird eigentlich der eingangs beschriebene Messvorgang einfach umgekehrt. Je nach Grösse der angelegten Spannung kann die Pumpleistung beeinflusst resp. gesteuert werden.

Es ist selbstverständlich, dass der erfindungsgemässe Sensor durch entsprechende Materialwahl auch für die Messung von anderen Gasen ausgelegt werden kann. Beispielsweise kann für die Messung von Schwefel als Keramikmaterial ein Zinksulfid verwendet werden.

## Patentansprüche

1. Sauerstoffsensor für die Messung des Sauerstoffanteils in Gasen, welcher zwei durch eine sauerstoffdurchlässige Keramikschicht (1) getrennte Elektroden (2,3) aufweist, dadurch gekennzeichnet, dass die Keramikschicht (1) zwischen parallel angeordneten Elektrodenleitungen (4,5) als dünne Membran (6) ausgebildet ist, wobei die Membran (6) durch die Elektrodenleitungen (4,5) abgestützt ist.

2. Sauerstoffsensor nach Anspruch 1, dadurch gekennzeichnet, dass die Keramikschicht (1) jeweils die auf einer Seite der Keramikschicht (1) angeordneten Elektrodenleitungen (4) teilweise umschliesst, vorzugsweise u-förmig oder halbkreisförmig.

3. Sauerstoffsensor nach Anspruch 1 oder 2, dadurch gekennzeichnet, dass die Keramikschicht (6) aus Zirkoniumdioxyd mit bewusst erzeugten Fehlstellen im Gitter besteht.

4. Sauerstoffsensor nach einem der Ansprüche 1 bis 3, dadurch gekennzeichnet, dass die Keramikschicht (6) eine Dicke im Mikrometerbereich aufweist.

5. Sauerstoffsensor nach einem der Ansprüche 1 bis 4, dadurch gekennzeichnet, dass jeweils die Elektrodenleitungen (4,5) auf einer Seite der Membran (6) parallel zueinander, wenigstens im Abstand der Breite der Elektrodenleitungsquerschnitte, angeordnet sind, vorzugsweise in einem Abstand von ca. 10µm.

6. Sauerstoffensor nach einem der Ansprüche 1 bis 5, dadurch gekennzeichnet, dass die Scheibe (10) in den freien Bereichen zwischen den Elektrodenleitungen (4,5) wenigstens ein Diffusionsloch aufweist, und einseitig von einer gasdichten Glocke umschlossen wird.

7. Sauerstoffsensor nach einem der Ansprüche 1 bis 6, dadurch gekennzeichnet, dass die Elektrodenleitungen (4,5) je mit einer zusätzlichen, elektrisch leitenden, sauerstoffionendurchlässigen Schicht versehen sind, welche sich im wesentlichen über die Ausdehnung der Memran (6) erstreckt.

8. Sauerstoffsensor nach einem der Ansprüche 1 bis 7, dadurch gekennzeichnet, dass quer zu den Elektrodenleitungen (4,5) eine oder mehrere Heizleitungen (7) direkt auf dem Sauerstoffsensor vorgesehen sind.

9. Sauerstoffsensor nach Anspruch 8, dadurch gekennzeichnet, dass die Heizleitungen (7) aus PTC- oder NTC-Widerstandsmaterial bestehen, und dass sie trimmbar sind.

10. Sauerstoffsensor nach Anspruch 9, dadurch gekennzeichnet, dass an die Heizleitungen (7) eine aktiv geregelte oder konstante Spannung angelegt ist, welche ein- und ausschaltbar ist, und dass die Heizleitungen ein- und ausschaltbar mit einer Temperaturmessvorrichtung verbunden sind.

11. Sauerstoffsensor nach einem der Ansprüche 1 bis 10, dadurch gekennzeichnet, dass die Membrane(6) auf einem Trägermaterial (9), vorzugsweise aus Silizium, aufgebracht ist.

12. Sauerstoffsensor nach Anspruch 11, dadurch gekennzeichnet, dass das Trägermaterial (9) Ausnehmungen zum Durchlass von Gasen, insbesondere Sauerstoff, bis zur Membrane (6) aufweist.

13. Verfahren zur Herstellung eines Sauerstoffsensors nach einem der Ansprüche 1 bis 12, dadurch gekennzeichnet, dass die Elektroden (4,5), die Keramikschicht (6) und die Heizung (7) in Dünnfilmtechnik auf einem Trägermaterial (9) aufgebracht werden und anschliessend bereichsweise Trägermaterial (9) vollständig abgetragen wird, um sauerstoffdurchlässige Bereiche auf der Sauerstoffsensoroberfläche zu schaffen.

14. Verwendung von Sauerstoffsensoren nach einem der Ansprüche 1 bis 12 als Brennstoffzellen zur Erzeugung von elektrischer Energie durch Sauerstoffionenwanderung.

15. Verwendung von Sauerstoffsensoren nach einem der Ansprüche 1 bis 12 als Sauerstoffpumpen.
